# EUROPEAN PATENT APPLICATION

(11) **EP 1 925 788 A1**
(43) Date of publication of application: **28.05.2008**
(21) Application number: 06124666.6
(22) Date of filing: 23.11.2006
(51) Int. Cl.: F01M 3/02, F01M 3/04, F02D 19/02, F02D 19/12

(54) **Method and device for supplying a fluid additive to a compressed- or liquefied-gas-fuelled IC engine**

(71) Applicant: Crofts,, Pablo E., 2000 Antwerpen (BE)
(72) Inventor: Crofts,, Pablo E., 2000 Antwerpen (BE)
(74) Representative: Gevers, François

(57) **Abstract**

The present invention relates to a method and a device 118 for supplying a fluid additive for valve seat recession prevention, upper cylinder lubrication and/or carbon deposit cleaning from a fluid additive container to the air induction system of a liquefied- or compressed-gas-fuelled internal combustion engine 101,301. The method comprises the steps of monitoring at least one parameter and injecting the fluid additive under pressure in the air induction system 102 metered at a rate which is a function of at least said monitored parameter. To perform this, the device comprises a fluid additive container 119, at least one sensor 121 for monitoring at least one parameter and a means 120 for injecting said fluid additive under pressure in the air induction system 102 metered at a rate which is a function of at least said monitored parameter.

## Description

The present invention relates to a method and device for supplying a fluid additive for valve seat recession prevention, upper cylinder lubrication and/or cleaning carbon deposits to an air induction system of an internal combustion engine fuelled with a compressed or liquefied gas.

Typical automotive petrol contains a cocktail of additives to achieve the required octane rating, and sufficient qualities of valve seat recession (VSR) prevention, upper cylinder lubrication, cleaning of carbon deposits and/or corrosion inhibition, amongst others.

With the phasing out of leaded petrol, lead-replacement additives in the petrol have taken over the task of providing protection against VSR.

However, in the case of fuels requiring pressurized fuel reservoirs such as LPG, CNG, LNG and other combustible gases in compressed or liquefied form, it is not practicable or even possible to premix some of the additives which may be required or desirable for the optimum operation of the engine.

LPG, CNG, LNG are dry fuels with little or no lubricating properties, with the result that exhaust valves and valve seats can suffer VSR, especially where the valve seats are insufficiently hardened to cope with the lack of anti-VSR properties.

Consequently, engines running on LPG, CNG or LNG require the anti-VSR additives to be supplied separately.

In prior art engines, such as that disclosed in International Patent Application WO 92/07176, a fluid additive is supplied from a fluid additive container through a tube into the air induction system of the engine. The intake manifold vacuum causes the fluid to be sucked out of the container through a metering valve.

However, this prior art has significant drawbacks:

One important drawback is that maximum vacuum, and therefore maximum flow of the fluid, occurs at idle speed. Manifold vacuum decreases as the airflow increases. This means that in order to supply sufficient additive at high revolutions and load when the manifold pressure is lowest, an excessive amount of additive is required at lower revolutions and load, which is imprecise, inefficient, uneconomical and externally undesirable.

Furthermore, in forced-induction engines, such as those with turbochargers or superchargers, the manifold pressure at high loads may be too high, or may even be positive, rendering such a system unusable for delivering anti-VSR fluids, precisely in the operating environment where the valves and valve seats are at their most vulnerable to VSR.

The problem addressed by the present invention is therefore that of reliably ensuring the supply of the right quantity of fluid additive for each engine state for VSR prevention, upper cylinder lubrication and/or carbon deposit cleaning in a liquefied- or compressed-gas-fuelled internal combustion engine.

To solve this problem, the method of the invention comprises the steps of monitoring at least one parameter and injecting the fluid additive in the air induction system under pressure and metered at a rate which is a function of at least said monitored parameter.

The pressurisation of the fluid additive allows rendering its flow independent of the pressure in the air induction system, whereas the metered injection ensures the supply of just the right amount of fluid additive for the engine state.

Although the metered injection of fluid additives under pressure in the air induction system of internal combustion engines is known in the art, it has until now been used to supply performance-enhancing additives, such as nitrous oxide or methanol/water mixtures. These fluid additives, however, are injected with the purpose of increasing the power output of internal combustion engines for limited periods of time in applications such as aviation or very high performance automobiles. It would therefore not have been obvious for the skilled person to apply this solution to the problem of VSR prevention and/or upper cylinder lubrication.

Preferably, the at least one monitored parameter is processed by a control means that in response generates signals to control the injection rate of the fluid additive. This allows the injection rate of the fluid additive to be a complex, possibly non-linear function of at least one, possibly several parameters, so as to optimise the injection rate of the fluid additive. To generate those signals in real time, it is particularly advantageous if said control means is a microprocessor.

Preferably, the fluid additive contains more than trace amounts of at least one metal salt, such as a potassium salt, for preventing valve seat recession. As the at least one metal salt will deposit on the valve seats, it will protect from and compensate their wear.

Preferably, the fluid additive is injected at a volume ratio between 1:100 and 1:10000 with relation to the fuel, preferably between 1:500 and 1:5000. These very low ratios allow a very low fluid additive consumption rate, with the advantages of a smaller fluid additive container and low fluid additive container refilling rate.

Preferably, the fluid additive is injected at a pressure of at most 1 bar above the pressure in the air induction system. This allows the use of cheaper, simpler and more accurate low-pressure pumps.

Preferably, in order to ensure correct fluid additive injection while minimising the power necessary to pressurise it, the fluid additive pressure is also a function of at least one monitored parameter.

In forced-induction engines, it is preferable to keep the pressure in the fluid additive container at least substantially equal to the pressure in the air induction system. In this way, pump load is reduced, which allows the use of low-power, high-precision pumps.

To compensate for air volume changes and fluid consumption in atmospheric internal combustion engines and in forced-induction engines where the fluid additive is injected upstream of any forced-induction device, it is preferable keep the pressure inside the fluid additive container at least substantially equal to the ambient pressure.

To optimise the quantity of fluid additive injected so as to reduce its consumption and therefore its cost and external impact, said monitored parameter comprises an engine parameter, such as engine rpm, throttle position, accelerator pedal position, fuel flow rate, air flow rate, air induction system pressure and/or induction air temperature.

It is also advantageous, in order to optimise the fluid additive injection, if said monitored parameter comprises at least one external parameter, such as vehicle speed, altitude or ambient air temperature.

To ensure the supply of the fluid additive for valve seat recession prevention and/or upper cylinder lubrication from the fluid additive container to the air induction system, the device of the invention comprises, besides said fluid additive container, at least one sensor for monitoring a parameter and a means for injecting said fluid additive in the air induction system under pressure and metered at a rate which is a function of at least said monitored parameter.

In a particularly advantageous embodiment, the injection means comprises a pump for pressurising the fluid additive. Preferably, the pump is electromagnetic. With such a pump, precise fluid additive pressures can be achieved, so as to better control the quantity of fluid additive injected.

Preferably, the fluid additive injection rate is metered using a valve. An electromagnetic valve, in particular, provides a simple and precise metering means.

Preferably, the device further comprises a control means, preferably in the form of a microprocessor, connected to said at least one sensor and to said injection means, for processing said at least one engine parameter and generate in response signals to control the injection rate of the fluid additive.

Preferably, for forced-induction engines, the device further comprises a pressure equalisation duct linking the fluid additive container and the air induction duct in order to equalise their pressures. It is preferable if said pressure equalisation duct comprises a non-return valve, so as to avoid fluid additive blowback in case of air induction duct underpressure.

For atmospheric engines, and for forced-induction engines where the fluid additive nozzle is upstream of any forced-induction device, the device preferably comprises a breather device in the fluid additive container in order to equalise its pressure with that of the ambient air.

In order to more efficiently inject said fluid additive into the air induction system, said fluid additive injection means preferably comprises at least one nozzle provided to be installed in said air induction system.

Alternatively, or complementarily, said fluid additive injection means can be provided to be connected to at least one fuel injection nozzle in said air induction system in order to inject said fluid additive into said air induction system through said at least one fuel injection nozzle.

The invention also relates to an internal combustion engine provided to be fuelled with a compressed- or liquefied-gas fuel and comprising such a fluid additive injection device.

Two embodiments of the invention will now be described illustratively, but not limitingly, with reference to the figures.
Fig. 1 illustrates schematically a first embodiment of the invention in a forced-induction engine;
Fig. 2 illustrates schematically an electromagnetic pump for said embodiment of the invention; and
Fig. 3 illustrates schematically a second embodiment of the invention in an atmospheric engine.

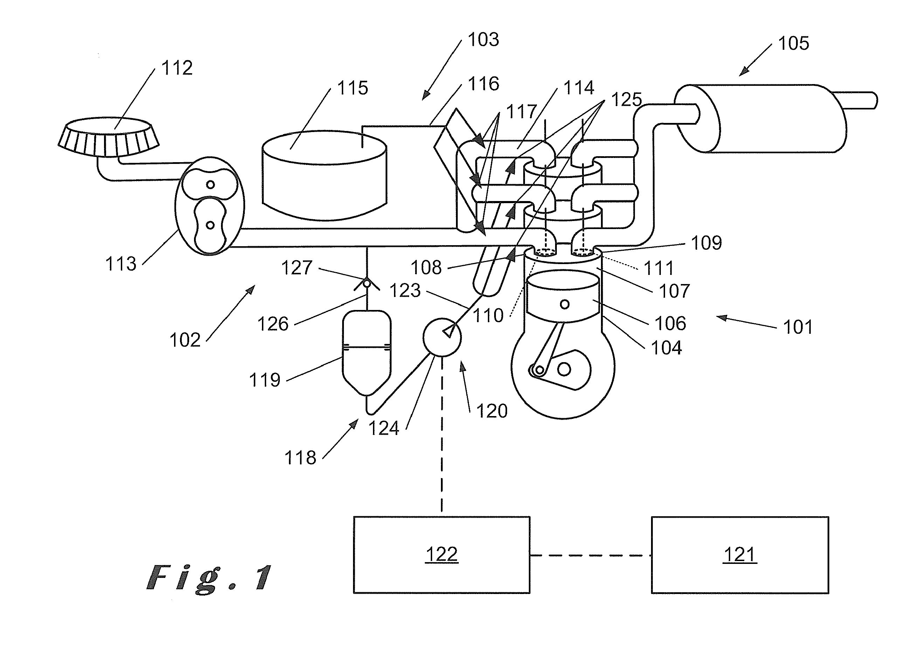

In Fig. 1, a forced-induction engine 101 is illustrated comprising an air induction system 102, a fuel supply system 103, cylinders 104, and an exhaust system 105. Each cylinder 104 comprises a piston 106 and a combustion chamber 107 with a charge inlet 108 and an exhaust outlet 109. Inlet and outlet valves 110,111 are provided to open and close said charge inlet 108 and exhaust outlet 109, respectively.

The air induction system 102 comprises an air filter 112, a compressor 113 and an inlet manifold 114. The compressor 113 can be, for example, a supercharger driven by an engine shaft, or a turbocharger driven by an exhaust turbine. The inlet manifold 114 is connected to the charge inlet 108 of each cylinder 104.

The fuel supply system 103 comprises a pressurised tank 115 provided to contain a compressed- or liquefied-gas fuel, such as LPG, LNG or CNG, a fuel circuit 116 and fuel injection nozzles 117 tapped into the inlet manifold 114.

Additionally, the forced-induction engine 101 comprises a fluid additive supply device 118 according to an embodiment of the invention. This fluid additive supply device 118 comprises a fluid additive container 119, a fluid additive injection means 120 for injecting under pressure fluid additive from said fluid additive container 119 in the air induction system 102, an array of engine and external parameter sensors 121 and a control means 122, in the form of a microprocessor connected to said array of engine and external parameter sensors 121 and to said fluid additive injection means 120.

The fluid additive container 119 may be made of plastic, metal or any other material compatible with the additive fuel. It comprises a scavenge, with or without an inline filter, and may comprise a fluid level warning device. Alternatively to that fluid level warning device in the fluid additive container, the fluid level in the fluid additive container 119 may be monitored by keeping track of the quantity of fluid additive consumed by the fluid additive injection means 120, so as to generate a fluid level warning when that quantity approaches the initial quantity of fluid additive in the fluid additive container 119. This measure of the fluid additive consumed may then be reset when the fluid additive container 119 is refilled.

In the embodiment illustrated in Fig. 1, the fluid additive injection means 120 comprises a fluid additive injection circuit 123 with an electromagnetic pump 124, connected to the control means 122.

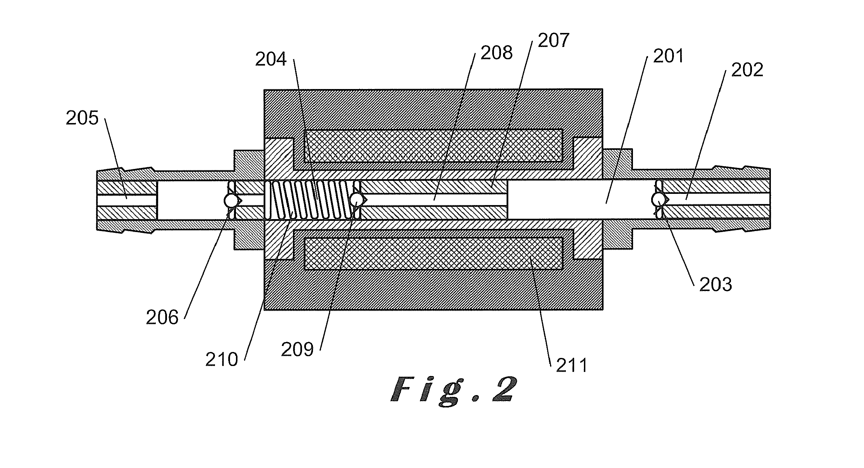

An embodiment of this electromagnetic pump 124 is illustrated in more detail in Fig. 2. It comprises a suction chamber 201 with an inlet 202 comprising a non-return valve 203, a pressure chamber 204 with an outlet 205 comprising a non-return valve 206, a ferromagnetic piston 207 with a fluid passage 208 comprising a non-return valve 209 between the suction and pressure chambers 201,204, a resilient element 210 and a coil 211.

The resilient element 210 is placed so as to force the piston 207 towards the suction chamber 201. When the coil 211 is energised, an electromagnetic force will displace the piston 207 in the opposite direction towards the pressure chamber 204, thus suctioning fluid into the suction chamber 201 through the inlet 202 and its non-return valve 203 while pressuring the fluid in the pressure chamber 204 out of it through the outlet 205 and its non-return valve 206. When the coil 211 is de-energised again, the piston 207 will be forced again towards the suction chamber 201, pushing the fluid from the suction chamber 201 to the pressure chamber 204 through the fluid passage 208 and its non-return valve 209. In use, the coil 211 is repeatedly energised and de-energised so as to move the piston 205 in a reciprocating motion between the suction and pressure chambers 201,204. Such an electromagnetic pump 124 provides a comparatively simple, yet effective means of pressurising and metering the fluid additive.

In other embodiments, however, the fluid additive may be pressurised and metered by other means known to the skilled person. The fluid additive injection means 120 may thus comprise a pump or other means for pressurising the fluid, with or without a separate, possibly electromagnetic, metering valve. Possible alternative pumps are, for example, a peristaltic pump, which would have the advantage of great metering precision, as well as a gear, rotary vane or diaphragm pump.

In the illustrated embodiment, the fluid additive injection circuit 123 also comprises nozzles 125, provided to be installed in the air induction system 102 between the air filter 112 and the inlet valves 110, in this particular embodiment in the inlet manifold 114.

To equalize the pressure of the fluid additive container 119 with that in the air induction system 102 between the compressor 113 and the inlet valves 110, the fluid additive container 119 is linked to the air induction system 102, in this particular embodiment at the inlet manifold 114, by a pressure equalisation duct 126. This allows the use of relatively low-pressure pumps, such as the electromagnetic pump 124, for pressurising the fluid additive to be injected.

The illustrated pressure equalisation duct 126 comprises a non-return valve 127 to prevent the fluid additive surging through the pressure equalisation duct 126 in case of an underpressure at the air induction system 102.

In an alternative embodiment, the nozzle 125 can be placed downstream of the air filter 112, but upstream of the compressor 113. As the pressure in the air induction system 102 ahead of the compressor 113 is close to atmospheric, no particular pressure equalisation means are needed in this alternative embodiment in order to allow the use of a relatively low-pressure pump.

The array of engine and external parameter sensors 121 may comprise a large variety of sensors for monitoring a large set of engine and external parameters.

Among the engine parameters that may be monitored by the array of engine and external parameter sensors 121 are engine rpm, throttle position, accelerator pedal position, fuel flow rate, induction air flow rate and air induction system pressure. The array of engine and external sensors 121 may also monitor at least one of the following external parameters: speed, altitude, ambient air pressure, ambient air temperature.

This array of engine and external parameter sensors 121 may comprise i.a. a Hall Effect sensor, an optical sensor, a proximity sensor, a reed switch or any other form of sensor that may be provided to be used to determine engine or external parameters.

The engine rpm may also be monitored by using or sensing the signals to and/or from engine ignition coils, a rev-counter (tachometer), an engine management system's central processing unit, the fuel supply system 103, an alternator or charging system, and/or any other signal sources that may be provided to be used to directly or indirectly determine engine revolutions.

The throttle position may be monitored by a sensor on the throttle body, or on one or more of the throttle bodies in engines with multiple throttle systems. It may also be monitored by sensing signals sent to and/or from the throttle.

The accelerator pedal position may be monitored by a position or angle sensor on the accelerator pedal and/or on any component of a linkage and/or cable system linked to the accelerator pedal.

The fuel flow rate may be monitored by using or sensing signals to and/or from the fuel supply system 103, e.g. by evaluating the frequency and/or pulse width of fuel injector pulses in a fuel supply system 103 comprising a fuel injection system governed by pulse frequency or pulse width modulation signals, and/or by evaluating any other physical parameter or signal that a skilled person could use to directly or indirectly monitor the fuel flow rate.

The air flow rate and/or air induction system pressure may be monitored using, respectively, an air mass sensor and/or an air pressure sensor in the air induction system 102, and/or by evaluating any other physical parameter or signal that a skilled person could use to respectively directly or indirectly monitor the air flow rate and/or air induction system pressure.

The speed may be monitored using the signals to and/or from a speed sensor, a speedometer, a central processing unit and/or any other signal source that may be provided to be used to directly or indirectly determine speed.

Altitude, ambient air pressure and/or temperature may be monitored using any conventional sensor suitable for these purposes.

The fluid additive supply device 118 may be originally installed in the engine 101, but it may also be installed afterwards, when the engine 101 is adapted to be fuelled by a liquefied- or compressed-gas fuel, or even later. In this case, each sensor in the array of engine and external parameter sensors 121 may be an original engine or vehicle sensor or a separately supplied, non-original-equipment sensor.

In use, for example to drive a vehicle, the forced-induction engine 101 of the illustrated embodiment generates a movement of the piston 106 by burning an air and fuel mixture in the combustion chamber 107. The air enters into the air induction system 102 through the air filter 112 and is then compressed in the compressor 113, which may be driven by an exhaust turbine or by an engine output shaft. Compressed- or liquefied gas fuel extracted from the tank 115 through the fuel circuit 116 is then injected in the inlet manifold 114 through the fuel injection nozzles 117, so as to mix with the compressed air. If the fuel is a liquefied gas fuel, it may be injected in a liquid state, so as to vaporise in the inlet manifold 114, or directly in a gaseous state. The air and fuel mixture will then enter the combustion chamber 107 in the cylinder 104 through the charge inlet 108 when the inlet valve 110 opens. After burning in the combustion chamber 107, generating an expansion work that will displace the piston 106, it is then exhausted through the exhaust outlet 109 when the outlet valve 111 opens. In liquid fuels, such as petrol, fluid additives are incorporated for upper cylinder lubrication, to prevent valve seat recession or to clean carbon deposits. However, such additives cannot easily be incorporated in "dry" fuels, such as compressed- or liquefied-gas fuels. For this reason, a fluid additive is separately supplied by the fluid additive supply device 118. That fluid additive may comprise at least one metal salt, such as a potassium salt, to counter valve seat recession, a lubricant for upper cylinder lubrication, a detergent for cleaning carbon deposits, etc.

The fluid additive container 119 contains this fluid additive, which flows through the fluid additive injection circuit 123, where it is put under pressure by the electromagnetic pump 124, to the nozzles 125, which inject it the inlet manifold 114, mixing it with the air and fuel mixture to be supplied to the cylinders 104. As the air and fuel mixture flows into the combustion chamber 107, the fluid additive will deposit on the inlet and outlet valves 110,111, their seats and the upper cylinder, where it can remedy valve seat recession, lubricate the upper cylinder and/or remove carbon deposits. For these purposes, the fluid additive only needs to be injected at a very small volume ratio with respect to the fuel, between 1:100 and 1:10000 and preferably between 1:500 and 1:5000, as opposed to the much higher ratios in water, methanol and/or nitrous oxide injection systems used in some high performance automobiles. Also, because it is unnecessary to atomise the fluid additive for the purpose of the present invention, it may be injected at a relatively low pressure, typically less than 1 bar, above the pressure of the air induction system 102. It is not essential or required to inject the fluid additive in direct and instantaneous relation to the fuel, as the fluid additive is not part of the combustion process itself. The fluid additive does not, and is not intended to, modify the combustion process. It is also not necessary for the fluid additive injection to be continuous, and can instead take place intermittently.

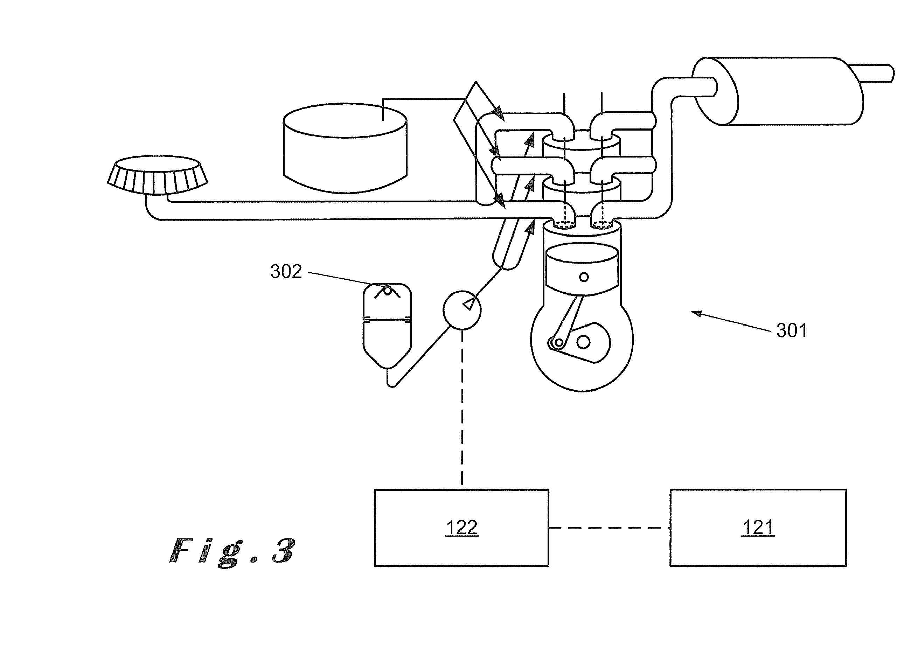

Fig. 3 illustrates an atmospheric engine 301 with an alternative embodiment of the fluid additive supply device 118. In this alternative embodiment, as the air in the air induction system is not under a significant overpressure, it is not necessary to equalise the pressure in the fluid additive container with that in the air induction system. However, a breather device 302 is installed in the fluid additive container to equalise the pressure in the fluid additive container with that of the ambient air, compensating for air volume changes and fluid additive consumption. The same alternative embodiment is also applicable in a forced-induction engine 101 if the fluid additive is injected between the air filter and the compressor.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

### Table of references

| | |
|---|---|
| 101 | Forced-induction IC engine |
| 102 | Air induction system |
| 103 | Fuel supply system |
| 104 | Cylinders |
| 105 | Exhaust system |
| 106 | Piston |
| 107 | Combustion chamber |
| 108 | Charge inlet |
| 109 | Exhaust outlet |
| 110 | Inlet valve |
| 111 | Outlet valve |
| 112 | Air filter |
| 113 | Compressor |
| 114 | Inlet manifold |
| 115 | Pressurised tank |
| 116 | Fuel circuit |
| 117 | Fuel injection nozzles |
| 118 | Fluid additive supply device |
| 119 | Fluid additive container |
| 120 | Fluid additive injection means |
| 121 | Array of engine and external sensors |
| 122 | Control means |
| 123 | Fluid additive injection circuit |
| 124 | Electromagnetic pump |
| 125 | Nozzle |
| 126 | Pressure equalisation duct |
| 127 | Non-return valve |
| 128 | Throttle body |
| 129 | Accelerator pedal |
| 201 | Suction chamber |
| 202 | Inlet |
| 203 | Non-return valve |
| 204 | Pressure chamber |
| 205 | Outlet |
| 206 | Non-return valve |
| 207 | Ferromagnetic piston |
| 208 | Fluid passage |
| 209 | Non-return valve |
| 210 | Resilient element |
| 211 | Coil |
| 301 | Atmospheric IC engine |
| 302 | Breather device |

## Claims

1. A method for supplying a fluid additive for valve seat recession prevention, upper cylinder lubrication and/or carbon deposit cleaning from a fluid additive container to the air induction system of a liquefied- or compressed-gas-fuelled internal combustion engine (101,301), **characterised in that** it comprises the steps of:
a) monitoring at least one parameter; and
b) injecting the fluid additive in the air induction system (102) under pressure and metered at a rate which is a function of at least said monitored parameter.

2. A method according to claim 1, wherein said monitored parameter is processed by a control means (122), preferably a microprocessor, that in response generates signals to control the injection rate of the fluid additive.

3. A method, according to any one of the previous claims, wherein said fluid additive contains more than trace amounts of a metal salt, such as a potassium salt, for valve seat recession prevention.

4. A method according to any one of the previous claims, wherein the fluid additive is injected at a volume ratio with respect to the fuel between 1:100 and 1:10000, preferably between 1:500 and 1:5000.

5. A method according to any one of the previous claims, wherein the fluid additive is injected at a pressure of at most 1 bar above the pressure in the air induction system (102).

6. A method according to any one of the previous claims, wherein the fluid additive pressure is also a function of at least said monitored parameter.

7. A method according to any one of the previous claims, wherein said internal combustion engine (101,301) is a forced-induction engine (101) and the pressure in a fluid additive container (119) is kept at least substantially equal to the pressure in the air induction system (102).

8. A method according to any one of claims 1-6, wherein the pressure in a fluid additive container (119) is kept at least substantially equal to the ambient pressure.

9. A method according to any one of the previous claims, wherein said at least one monitored parameter comprises at least one engine parameter, such as engine rpm, throttle position, accelerator pedal position, fuel flow rate, air flow rate, air induction system pressure and/or temperature.

10. A method according to any one of the previous claims, wherein said at least one monitored parameter comprises at least one external parameter, such as vehicle speed, altitude or ambient air temperature, is also monitored and said fluid additive injection rate and/or pressure is also function of said at least one monitored external parameter.

11. A device (118) for supplying a fluid additive for valve seat recession prevention, upper cylinder lubrication and/or cleaning carbon deposits to the air induction system (102) of an internal combustion engine (101,301) provided to be fuelled with a liquefied- or compressed-gas fuel, said device comprising a fluid additive container (119) and being **characterised in that** it further contains:
a) at least one sensor (121) for monitoring at least one parameter; and
b) a means (120) for injecting said fluid additive in the air induction system (102) under pressure and metered at a rate which is a function of at least said monitored parameter.

12. A device according to claim 11, wherein said injection means (120) comprises a pump (124), preferably electromagnetic, and/or a valve, preferably electromagnetic.

13. A device according to claims 11 or 12, further comprising a control means (122), preferably in the form of a microprocessor, connected to said at least one sensor (121) and to said injection means (120), for processing said at least one engine parameter and generate in response signals to control the injection rate of the fluid additive.

14. A device according to any one of claims 11 to 13, further comprising a pressure equalisation duct (126) for linking said fluid additive container (119) and said air induction system (102), said pressure equalisation duct (126) preferably comprising a non-return valve (127).

15. A device according to any one of claims 11 to 14, wherein said fluid additive container (119) comprises a breather device (302) for equalising the pressure in the fluid additive container (119) with the ambient pressure.

16. A device according to any one of claims 11 to 15, wherein said fluid additive injection means (120) comprises at least one nozzle (125) provided to be installed in said air induction system (102).

17. A device according to any one of claims 11 to 16, wherein said fluid additive injection means (120) is provided to be connected to at least one fuel injection nozzle (117) in said air induction system (102) in order to inject said fluid additive into said air induction system (102) through said at least one fuel injection nozzle (117).

18. An internal combustion engine (101,301) provided to be fuelled with a liquefied- or compressed-gas fuel and comprising a device (118) according to any one of claims 11 to 17.
